Europäisches Patentamt

European Patent Office

Office européen des brevets

(11) Veröffentlichungsnummer: **0 274 704**

**A1**

# (12) EUROPÄISCHE PATENTANMELDUNG

(21) Anmeldenummer: 87118764.7

(22) Anmeldetag: 17.12.87

(51) Int. Cl.4 **G11B 20/14** , H04L 7/02

(30) Priorität: 22.12.86 DE 3643966

(43) Veröffentlichungstag der Anmeldung:
20.07.88 Patentblatt 88/29

(84) Benannte Vertragsstaaten:
DE GB

(71) Anmelder: TANDBERG DATA A/S
Kjelsasveien 161 Postboks 9 Korsvoll
N-0808 Oslo 8(NO)

(72) Erfinder: Solhjell, Erik
Konvallveien 30
N-00855 Oslo 8(NO)

(74) Vertreter: Mehl, Ernst, Dipl.-Ing. et al
Postfach 22 02 61
D-8000 München 22(DE)

(54) Schaltungsanordnung zum Erkennen von unzulässigen Phasenfehlern in einem Phasenregelkreis.

(57) Bei einer Wiedergewinnung von auf einem magnetischen Medium gespeicherten Daten wird für die Taktierung von den Daten zugeordneten Datensignalen (D) üblicherweise ein Phasenregelkreis verwendet, der mit den Datensignalen (D) synchronisierte Taktsignale (C) erzeugt. Die Datensignale (D) unterliegen verschiedenen Verzerrungen und insbesondere einer Verschiebung einzelner Datensignale (D) in Abhängigkeit von den aufgezeichneten Daten.

Um zu verhindern, daß der Phasenregelkreis diese Verschiebungen als Phasen-oder Frequenzfehler verarbeitet, wird eine Schaltstufe (F1, F2, CO, G) vorgesehen, die beim Auftreten von derartigen Verschiebungen die Regelung im Phasenregelkreis sperrt. Die Schaltstufe enthält eine Verzögerungsstufe (F1, F2) und einen Vergleicher (CO) und die Regelung wird gesperrt, wenn aufeinanderfolgend Phasendifferenzen zwischen den Datensignalen (D) und den Taktsignalen (C) in entgegengesetzten Richtungen auftreten.

Taktierung von Lesesignalen im Magnetbandgeräten.

FIG 3

## Schaltungsanordnung zum Erkennen von unzulässigen Phasenfehlern in einem Phasenregelkreis

Die Erfindung bezieht sich auf eine Schaltungsanordnung zum Erkennen von unzulässigen Phasenfehlern in einem Phasenregelkreis gemäß dem Oberbegriff des Patentanspruchs 1.

Bei einer Wiedergabe von auf einem Aufzeichnungsträger, beispielsweise einem Magnetband oder einer Magnetplatte aufgezeichneten Daten können die von einem Wandler, beispielsweise einem Magnetkopf abgegebenen Datensignale in verschiedener Weise verzerrt werden. Die Verzerrungen können infolge von Schwankungen der Relativgeschwindigkeit zwischen dem Aufzeichnungsträger und dem Wandler, Rauschen, Staubteilchen, Unzulänglichkeiten in der Oberfläche des Aufzeichnungsträgers oder im Fall eines magnetischen Aufzeichnungsträgers durch die besonderen Eigenschaften der magnetischen Teilchen auftreten. Um eine bestmögliche Wiedergabe der durch die Datensignale gespeicherten Daten sicherzustellen, wird üblicherweise ein Phasenregelkreis verwendet, der auch als Phase-Locked-Loop (PLL) bezeichnet wird, um Taktsignale zu erzeugen, die mit den wiedergegebenen Datensignalen synchronisiert sind. Der Phasenregelkreis kann sowohl als analoger als auch als digitaler Schaltkreis ausgebildet sein.

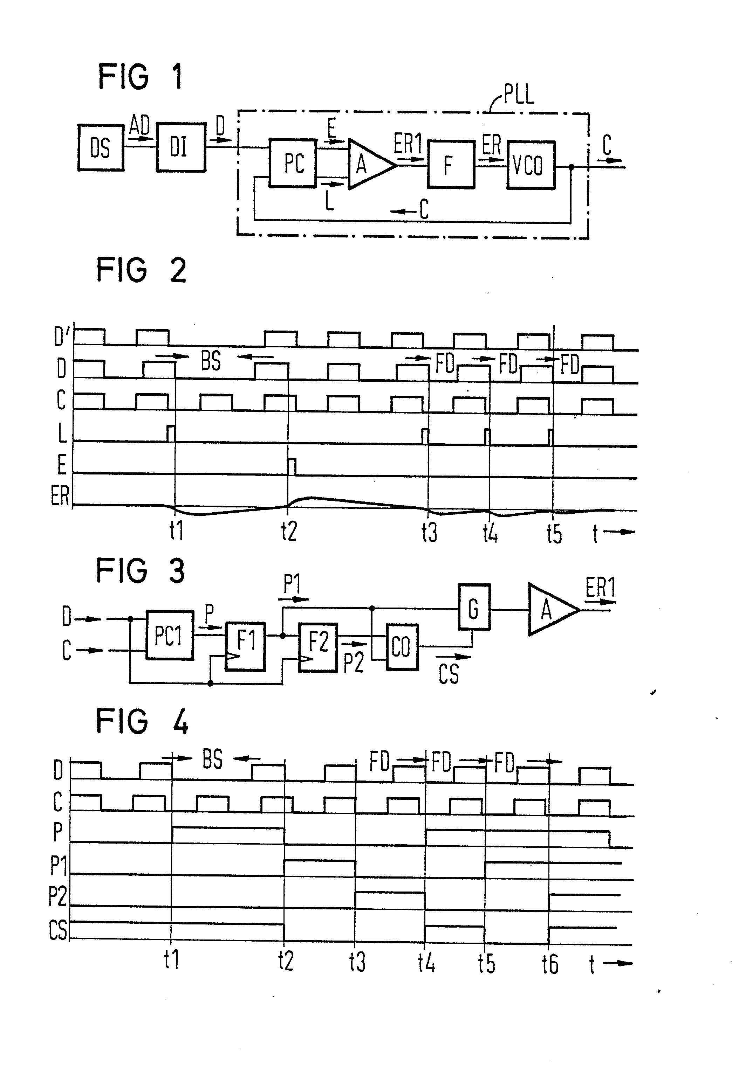

Ein derartiger als analoger Schaltkreis ausgebildeter Phasenregelkreis ist in FIG 1 dargestellt. Die analogen Datensignale AD gelangen von einer Datenquelle DS, beispielsweise einem Magnetkopf eines Magnetbandgeräts oder eines Magnetplattenspeichers zu einer Digitalisierungsstufe DI, die aus den analogen Datensignalen AD binäre Datensignale D erzeugt. Diese Datensignale D werden dem Phasenregelkreis PLL zugeführt, der als Bezugstaktsignale dienende Taktsignale C erzeugt. Die Taktsignale C werden in einem spannungsgesteuerten Oszillator VCO erzeugt und ebenso wie die Datensignale D einem Phasenvergleicher PC zugeführt. Dieser erzeugt, je nach dem ob die Datensignale D den Taktsignalen C vor-oder nacheilen Phasensignale E bzw. L, deren Dauer der Vor-bzw. Nacheilung entspricht. Ein Verstärker A erzeugt aus diesen Phasensiganlen E und L ein Fehlersignal ER1 und führt es einem Filter F, üblicherweise einem Tiefpaßfilter zu, das ein Regelsignal ER erzeugt und an den spannungsgesteuerten Oszillator VCO abgibt. Dieser ändert die Frequenz der Taktsignale C in Abhängigkeit von dem Momentanwert des Regelsignals ER derart, daß einer Phasendifferenz zwischen den Datensignalen D und den Taktsignalen C entgegengewirkt wird.

Bei der Darstellung in FIG 2 sind die Datensignale D' ideale Datensignale, bei denen sich die Abstände der Vorderflanken in Abhängigkeit von den aufzuzeichnenden Daten um ganzzahlige Faktoren unterscheiden.

Bei einer Aufzeichnung auf einen Aufzeichnungsträger kann der Fall eintreten, daß aufeinanderfolgende Datensignale D in entgegengesetzter Richtung verschoben werden. Dieser Fall tritt insbesondere dann auf, wenn sich die Abstände der Datensignale verändern und die Datensignale D werden dann jeweils zu der dabei entstehenden Lücke hin verschoben. Dieser Vorgang wird auch als "Bitshift" bezeichnet und ist in der FIG 2 durch BS gekennzeichnet. Es kann aber auch der Fall eintreten, daß, beispielsweise durch eine Schwankung der Relativgeschwindigkeit zwischen dem Aufzeichnungsträger und dem Wandler die Datensignale D in einer Richtung verschoben werden, was dann einer Frequenzabweichung entspricht und in FIG 2 mit FD gekennzeichnet ist.

In beiden Fällen hat der Phasenregelkreis PLL die Aufgabe, die Einflüsse dieser Effekte zu beseitigen. Bei einer Frequenzabweichung FD besteht keine Schwierigkeit, die Frequenz der Taktsignale C in einer Richtung zu verändern. Jedoch besteht die Gefahr, daß bei der ersten datenabhängigen Verschiebung, wie es beispielsweise zum Zeitpunkt t1 dargestellt ist, der Oszillator VCO so verstellt wird, wie es bei einer Frequenzabweichung FD entsprechend einer Nacheilung der Datensignale D verstellt wird, während beim darauffolgenden Datensignal D, wie es zum Zeitpunkt t2 dargestellt ist, das Datensignal D gegenüber dem Taktsignal C voreilt. Hierbei kann der Fall eintreten, daß die Synchronisation zwischen den Datensignalen D und den Taktsignalen C verloren geht und damit die aufgezeichneten Daten nicht eindeutig wiedergewonnen werden können.

Bei einer Nacheilung der Datensignale D gegenüber den Taktsignalen C werden zu den Zeitpunkten t1 und t3 bis t5 Phasensignale L erzeugt, während bei der Voreilung zum Zeitpunkt t2 ein Phasensignal E erzeugt wird. Der Verstärker A und das Filter F erzeugen aus den Phasensignalen E und L das Regelsignal ER, das dem Oszillator VCO zugeführt wird, um die Frequenz der Taktsignale C zu verändern, um eine möglichst gute Synchronisation zwischen den Taktsignalen C und den Datensignalen D sicherzustellen.

Das Filter F ist normalerweise in der Lage, die datenabhängigen Verschiebungen BS auszugleichen, jedoch kann bei Speichern, an die besonders hohe Anforderungen gestellt werden, der Fall eintreten, daß die Beseitigung der informationsabhängigen Verschiebungen sehr schwierig ist, ohne das Hochfrequenzverhalten des Phasenregelkreises PLL zu stören.

Der Erfindung liegt daher –die Aufgabe zugrunde, eine Schaltungsanordnung anzgueben, die es ermöglicht, die Einflüsse von unzulässigen Phasenfehlern infolge von datenabhängigen Verschiebungen zu beseitigen, ohne daß das Hochfrequenzverhalten des Phasenregelkreises gestört wird.

Erfindungsgemäß wird die Aufgabe bei der Schaltungsanordnung der eingangs genannten Art durch die im kennzeichnenden Teil des Patentanspruchs 1 angegebenen Merkmale gelöst.

Die vorliegende Erfindung beruht auf der Tatsache, daß die datenabhängigen Verschiebungen, wie sie hier definiert sind, im mer darauf beruhen, daß zwei aufeinanderfolgende Datensignale in einander entgegengesetzten Richtungen verschoben sind. Diese Verschiebungen werden mit Hilfe einer Schaltstufe erkannt und die Regelung durch den Phasenregelkreis wird gesperrt.

Weiterbildungen der Erfindung ergeben sich aus den Unteransprüchen.

Der Stand der Technik und Ausführungsbeispiele der Schaltungsanordnung gemäß der Erfindung sind in den Zeichnungen näher erläutert. Es zeigen

FIG 1 ein Blockschaltbild eines bekannten Phasenregelkreises,

FIG 2 ein Signalbild von Signalen an verschiedenen Punkten des in FIG 1 dargestellten Phasenregelkreises,

FIG 3 ein Blockschaltbild einer Schaltungsanordnung gemäß der Erfindung,

FIG 4 ein Zeitdiagramm von Signalen an verschiedenen Punkten der in FIG 3 dargestellten Schaltungsanordnung,

FIG 5 ein Schaltbild einer Ausführungsform der Schaltungsanordnung gemäß der Erfindung,

FIG 6 Zeitdiagramme von Signalen an verschiedenen Punkten der in FIG 5 dargestellten Schaltungsanordnung,

FIG 7 ein Ausführungsbeispiel einer in einem digitalen Phasenregelkreis vorgesehenen Schaltungsanordnung gemäß der Erfindung.

Bei dem in FIG 3 dargestellten Blockschaltbild entspricht der Phasenkomparator PC1 dem in FIG 1 dargestellten Phasenkomparator PC und unterscheidet sich von diesem im wesentlichen nur darin, daß er anstelle der Phasensignale E und L nur jeweils ein Phasensignal P abgibt, das durch seinen Binärwert angibt, ob ein Datensignal D einem Taktsignal C vor-oder nacheilt. Die Phasensignale P werden einem aus zwei Flipflops F1 und F2 gebildeten Verzögerungsglied zugeführt, die die Phasensignale P jeweils entsprechend dem Abstand der Datensignale D verzögern und verzögerte Phasensignale P1 und P2 abgeben. Die verzögerten Phasensignale P1 und P2 werden einem Vergleicher CO zugeführt, der Steuersignale CS abgibt, mit denen die Phasensignale P1 gesperrt werden, wenn zwei aufeinanderfolgende datenabhängige Verschiebungen BS in entgegengesetzten Richtungen auftreten. Das Sperren erfolgt durch ein Gatter G, das einem Verstärker A1 vorgeschaltet ist und das über diesen nur dann ein Regelsignal ER1 abgibt, wenn ein Steuersignal CS gleichzeitig mit dem Phasensignal P1 auftritt.

Bei der Darstellung in FIG 4 stellt der Phasendetektor PC1 zum Zeitpunkt t1 fest, daß das Datensignal D dem Taktsignal C nacheilt und das Phasensignal P nimmt den Binärwert 1 an. Zum Zeitpunkt t2 stellt der Phasendetektor PC1 fest, daß das Datensignal D dem Taktsignal C voreilt und das Phasensignal P nimmt wieder den Binärwert 0 an. Da das Datensignal D dem Takteingang des Flipflops F1 zugeführt wird, an dessen Dateneingang das Phasensignal P anliegt, wird das Flipflop F1 zum Zeitpunkt t2 gesetzt. Zum Zeitpunkt t3 wird mit der Rückflanke des nächsten Datensignals D das Flipflop F1 wieder zurückgesetzt und das Flipflop F2 gesetzt. Zu den Zeitpunkten t4, t5 und t6 wird angenommen, daß die Datensignale D den Taktsignalen C infolge einer Frequenzabweichung FD nacheilen. Damit nimmt das Phasensignal P zu diesen Zeitpunkten jeweils den Binärwert 1 an bzw. behält diesen Binärwert 1 bei. In entsprechender Weise nehmen die Phasensignale P1 und P2 mit den jeweils nachfolgenden Datensignalen D den Binärwert 1 an.

Der Vergleicher CO sperrt zwischen den Zeitpunkten t2 und t4 die Phasensignale P1, da diese einander entgegengesetzten Phasenverschiebungen zugeordnet sind. Bis zum Zeitpunkt t2, zwischen den Zeitpunkten t4 und t5 und nach dem Zeitpunkt t6 wer den die Phasensignale P1 jedoch als Regelsignale ER1 durchgeschaltet, um die Synchronisation zwischen den Datensignalen D und den Taktsignalen C aufrechtzuerhalten. Ein Steuersignal CS zum Sperren des Gatters G wird immer dann abgegeben, wenn die Phasensignale P1 und P2 einen gleichen Binärwert aufweisen. Der Vergleicher CO kann zu diesem Zweck beispielsweise als ein Äquivalenzgatter ausgebildet sein. Das Gatter G kann beispielsweise als ein Tristate-Gatter ausgebildet sein, bei dem der Ausgang durch das Steuersignal CS hochohmig geschaltet wird und das durch das Steuersignal CS immer nur dann freigegeben wird, wenn keine datenabhängige Verschiebung der Datensignale D auftritt.

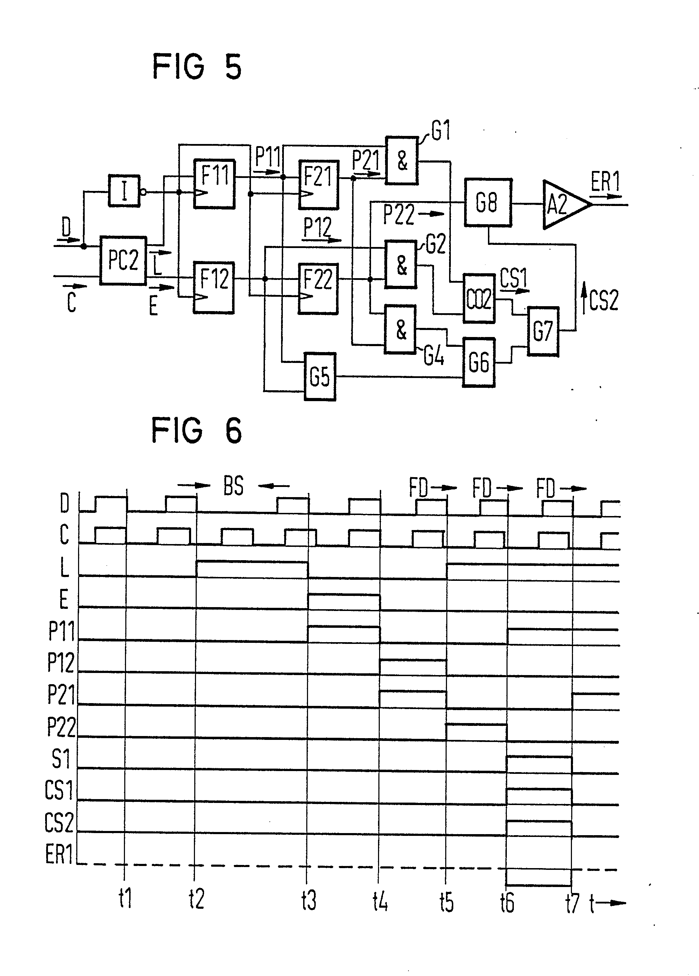

Das in FIG 5 dargestellte Schaltbild zeigt eine genauere Darstellung der in FIG 3 dargestellten Schaltungsanordnung. Der Phasenkomparator PC2 hat in diesem Schaltbild, entsprechend dem Blockschaltbild in FIG 1 zwei Ausgänge, an denen die Phasensignale E und L abgegeben werden. Jedes der Phasensignale E bzw. L wird in einem zweistufigen Verzögerungsglied, das aus Flipflops F11, F12, F21 und F22 gebildet wird, um zwei Periodendauern der Datensignale D verzögert. Zu diesem Zweck werden den Takteingängen der Flipflops die durch einen Inverter I invertierten Datensignale D zugeführt. Ein Phasensignal L wird abgegeben, wenn ein Datensignal D einem Taktsignal C nacheilt und ein Phasensignal E wird abgegeben, wenn ein Datensignal D einem Taktsignal C voreilt. Gatter G1 bis G3 prüfen, ob die verzögerten Phasensignale P11 und P21 oder P12 und P22 gleich sind. Weitere Gatter G4, G5 und G6 prüfen, ob unzulässige Zustände der Flipflops F11 bis F22 auftreten, wenn gleichzeitig die Phasensignale L und E auftreten. In diesem Fall wird durch ein Gatter G7 verhindert, daß das Phasensignal P22 über das Gatter G8 zum Verstärker A2 durchgeschaltet wird und dort als Regelsignal ER1 abgegeben wird. Falls keine unzulässigen Zustände auftreten, wird ein am Gatter G3 abgegebenes Steuersignal CS1 über das Gatter G7 als Steuersignal CS2 dem Gatter G8 zugeführt und dieses Steuersignal CS2 sperrt immer dann das Gatter G8, wenn aufeinanderfolgende Phasenverschiebungen in entgegengesetzten Richtungen auftreten und damit datenabhängige Verschiebungen der Datensignale D angezeigt werden. Das Steuersignal CS2 kann auch durch ein weiteres Flipflop synchronisiert werden, um Störspitzen auf dem dem Verstärker A2 zugeführten Signal zu vermeiden.

Das in FIG 6 dargestellte Zeitdiagramm unterscheidet sich von dem in FIG 4 dargestellten Zeitdiagramm einerseits dadurch, daß anstelle eines Phasensignals P die beiden Phasensignale L und E erzeugt werden, daß angenommen wird, daß zum Zeitpunkt t1 das Datensignal D dem Taktsignal C voreilt, zu den Zeitpunkten t4 und t5 nacheilt und zu den Zeitpunkten t6 und t7 in Phase ist. Die datenabhängige Verschiebung BS der Datensignale D tritt zu den Zeitpunkten t2 und t3 auf. In entsprechender Weise wie bei FIG 4 werden die Phasensignale L und E jeweils um zwei Periodendauern der Datensignale D verzögert und da nur zu den Zeitpunkten t4 und t5 die Phasenverschiebungen zwischen den Datensignalen D und den Taktsignalen C in der gleichen Richtung erfolgt, wird nur zwischen den Zeitpunkten t6 und t7 ein entsprechendes Regelsignal ER1 abgegeben. Somit sperrt auch die in FIG 5 dargestellte Schaltungsanordnung bei aufeinanderfolgenden einander entgegengesetzt gerichteten Phasenverschiebungen BS zwischen den Datensignalen D und den Taktsignalen C die Regelung durch den Phasenregelkreis PLL.

Bei dem in FIG 5 dargestellten Schaltbild ist der Phasenvergleicher PC2 derart ausgebildet, daß er die Phasensignale L und E jeweils bis zum Auftreten des nächsten Datensignals D speichert. Es ist auch möglich, einen Phasenvergleicher PC2 zu verwenden, bei dem, wie in FIG 2 dargestellt, die Phasensignale L und E jeweils eine Dauer aufweisen, die dem Phasenfehler entspricht. Diese Impulse werden in eine entsprechende Spannung umgesetzt, die abgetastet und solange gespeichert wird, bis sie durch das Gatter G8 hindurchgeschaltet wird, während das Steuersignal CS2 aktiv ist.

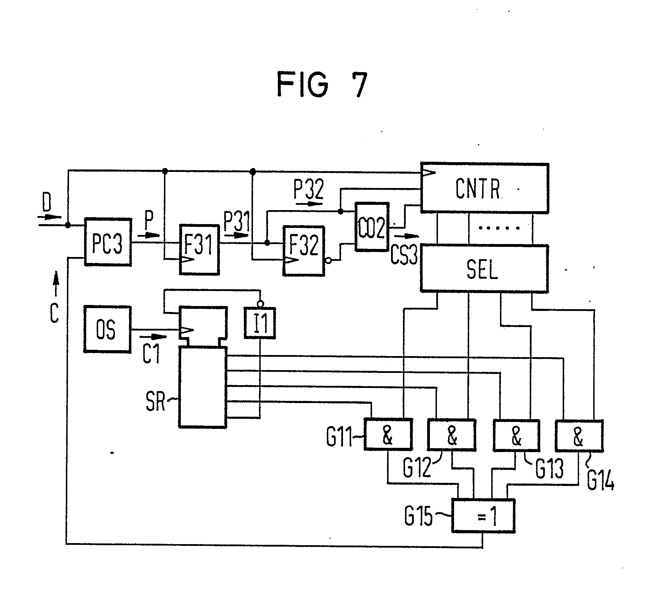

Die Schaltungsanordnung gemäß der Erfindung kann auch in einem vollständig digitalisierten Phasenregelkreis verwendet werden. Hierfür sind verschiedene Lösungen möglich. Eine verhältnismäßig einfache Lösung ist in FIG 7 dargestellt. Die Datensignale D und die Taktsignale C werden wiederum einem Phasenvergleicher PC3 zugeführt, der in Abhängigkeit zwischen jeweils einem Datensignal D und einem Taktsignal C ein Phasensignal P erzeugt. Die Phasensignale P werden durch zwei Flipflops F31 und F32 jeweils um eine Periodendauer der Datensignale D verzögert und ein als Vergleicher CO2 dienendes Äquivalenzgatter prüft, ob die Phasensignale P31 und P32 einen ungleichen Binärwert aufweisen und damit Phasenverschiebungen BS in einander entgegengesetzten Richtungen anzeigen.

Anstelle des spannungsgesteuerten Oszillators VCO ist in diesem digitalisierten Regelkreis ein Oszillator OS vorgesehen, der Taktsignale C1 mit verhältnismäßig hoher Folgefrequenz an ein durch einen Inverter I1 rückgekoppeltes Schieberegister SR abgibt. Die parallelen Ausgänge des Schieberegisters SR sind jeweils mit einem Eingang von UND-Gattern G11 bis G14 verbunden, deren Ausgänge jeweils einem ODER-Gatter G15 zugeführt werden. An dem Ausgang des ODER-Gatters G15 werden die Taktsignale C abgegeben.

Das Schieberegister SR dient als Frequenzteiler, bei dem jeweils ein Ausgangssignal an einem Ausgang gegenüber einem Ausgangssignal an einem vorhergehenden Ausgang leicht verzögert ist. Ein Datenselektor SEL wählt jeweils eines der Gatter G11 bis G14 aus, um das entsprechende Ausgangssignal des Schieberegisters SR als Taktsignal C über das ODER-Gatter G15 dem Phasenvergleicher PC3 zuzuführen. Der Datenselektor SEL wird durch einen Zähler CNTR angesteuert, an dessen Takteingang die Datensignale D anliegen, an dessen Aufwärts-Abwärts-Steuereingang das Phasensignal P31 anliegt und an dessen Freigabeeingang das Ausgangssignal des Vergleichers CO2 anliegt. In Abhängigkeit von dem Binärwert des Phasensignals P31 wird der Zähler mit jedem Datensignal D aufwärts oder abwärts gezählt, je nach dem ob einer Voreilung oder einer Nacheilung eines Datensignals D ge genüber einem Taktsignal C entgegengewirkt werden soll. Das Aufwärts-Abwärts-Zählen des Zählers CNTR erfolgt jedoch nur, wenn der Vergleicher CO2 ein Freigabesignal abgibt, d. h. wenn die Phasendifferenzen zwischen zwei aufeinanderfolgenden Datensignalen D und den zugehörigen Taktsignalen C die gleiche Richtung aufweisen. Falls die Phasendifferenzen der aufeinanderfolgenden Datensignale D verschiedene Richtungen aufweisen, wird der Zähler CNTR gesperrt, um eine einwandfreie Synchronisation zwischen den Datensignalen D und den Taktsignalen C zu gewährleisten.

Ansprüche

1. Schaltungsanordnung zum Erkennen von unzulässigen Phasenfehlern in einem Phasenregelkreis, bei dem durch einen Phasenvergleich von binären Datensignalen und Taktsignalen Phasensignale erzeugt werden, und bei dem in Abhängigkeit von den Phasensignalen die Folgefrequenz von in einem Oszillator erzeugten Taktsignalen verändert wird, dadurch gekennzeichnet, daß eine die Phasendifferenzen zwischen jeweils zwei aufeinanderfolgenden Datensignalen (D) und den zugehörigen Taktsignalen (C) ermittelnde Schaltstufe (F1, F2, C, G) vorgesehen ist, die einen unzulässigen Phasenfehler erkennt, wenn zwei aufeinanderfolgende Phasendifferenzen einander entgegengesetzte Richtungen aufweisen und die beim Auftreten eines derartigen unzulässigen Phasenfehlers die Veränderung der Folgefrequenz der Taktsignale (C) sperrt.

2. Schaltungsanordnung nach Anspruch 1, dadurch gekennzeichnet, daß die Schaltstufe (F1, F2, C, G) eine Verzögerungsstufe (F1, F2) enthält, die die Phasensignale (P) jeweils um eine Periodendauer der Datensignale (D) verzögert und einen Vergleicher (C) enthält, der die jeweils um eine Periodendauer verzögerten Phasensignale (P1, P2) miteinander vergleicht.

3. Schaltungsanordnung nach Anspruch 2, dadurch gekennzeichnet, daß die Verzögerungsstufe aus zwei taktgesteuerten Flipflops (F1, F2) besteht.

4. Schaltungsanordnung nach Anspruch 2 oder Anspruch 3, dadurch gekennzeichnet, daß der Vergleicher (C) aus einem Äquivalenzgatter (C2, C3) besteht.

5. Schaltungsanordnung nach einem der Ansprüche 1 bis 4, dadurch gekennzeichnet, daß das Sperren der Regelung durch den Phasenregelkreis (PLL) durch Sperren der Übertragung der von dem Phasenvergleicher (PC) abgegebenen und verzögerten Phasensignale (P1) zu einem dem Oszillator (VCO) vorgeschalteten Filter (F) erfolgt.

6. Schaltungsanordnung nach einem der Ansprüche 1 bis 4, dadurch gekennzeichnet, daß das Sperren der Veränderung der Folgefrequenz der Taktsignale (C) durch Sperren eines dem Oszillator (VCO) zugeführten analogen Regelsignals (ER) erfolgt.

7. Schaltungsanordnung nach einem der Ansprüche 1 bis 4, dadurch gekennzeichnet, daß die Schaltstufe (F1, F2, C, G) als Teil eines digitalen Phasenregelkreises ausgebildet ist.

8. Schaltungsanordnung nach Anspruch 7, dadurch gekennzeichnet, daß die Schaltstufe (F1, F2, C, G) einen Aufwärts-Abwärts-Zähler (CNTR) enthält, der mittels eines Datenselektors (SEL) an Ausgängen eines durch Taktsignale (C1) fortgeschalteten und rückgekoppelten Schieberegisters (SR) abgegebenen Ausgangssignale als Taktsignale (C) dem Phasenvergleicher (PC3) zuführt.

0 274 704

FIG 1

FIG 2

FIG 3

FIG 4

# FIG 5

# FIG 6

# FIG 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 115 057 (SIEMENS) * Seite 6, Zeile 9 - Seite 7, Zeile 26; Figuren 1-3 * --- | 1-3,6,7 | G 11 B 20/14 H 04 L 7/02 |
| A | EP-A-0 153 107 (PRIME COMPUTER INC.) * Seite 5, Zeilen 11-27; Figur 1 * --- | 1,5,6 | |
| A | IBM TECHNICAL DISCLOSURE BULLETIN, Band 8, Nr. 12, Mai 1966, Seiten 1742-1746, New York, US; W.T. HARNETT: "Error feedback clocking" --- | | |
| A | TELECOMMUNICATIONS & RADIO ENGINEERING, Band 31/32, Nr. 8, August 1977, Scripta Publishing Co., Washington, US; A.S. GEORGIYEV: "A synchronization system with digital control in high-speed data transmission" * Seiten 22-24 * --- | | |
| A | EP-A-0 141 946 (ANT NACHRICHTENTECHNIK GmbH) --- | | RECHERCHIERTE SACHGEBIETE (Int. Cl.4) |
| A | IBM TECHNICAL DISCLOSURE BULLETIN, Band 28, Nr. 5, Oktober 1985, Seite 1986-1987, New York, US; "Voter frequency control loop for global common clock" --- | | G 11 B H 04 L |
| A | US-A-4 607 296 (AMPEX) ----- | | |

Der vorliegende Recherchenbericht wurde für alle Patentansprüche erstellt

| Recherchenort | Abschlußdatum der Recherche | Prüfer |
|---|---|---|
| DEN HAAG | 16-03-1988 | CARTRYSSE A.A.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................................
& : Mitglied der gleichen Patentfamilie, übereinstimmendes Dokument

EPO FORM 1503 03.82 (P0403)